# EUROPEAN PATENT SPECIFICATION

(11) **EP 2 435 380 B1**
(45) Date of publication and mention of the grant of the patent: **18.09.2019**
(21) Application number: 09785225.5
(22) Date of filing: 29.05.2009
(51) Int. Cl.: C04B 28/04

(54) **CONCRETE COMPOSITIONS**
BETONZUSAMMENSETZUNGEN
COMPOSITIONS DE BÉTON

(43) Date of publication of application: 04.04.2012
(73) Proprietor: Marshalls Mono Limited, Elland, West Yorkshire HX5 9HT (GB)
(72) Inventor: FERGUSON, Ian, Frances, Halifax Yorkshire HX5 9HT (GB)
(74) Representative: Appleyard Lees IP LLP
(86) International application number: PCT/GB2009/050588
(87) International publication number: WO 2010/136744

(56) References cited:
- JP-A- 11 147 750
- JP-A- 2000 128 616
- W.ZHU,J.C.GIBBS: "Use of different limestone and chalk powders in self-compacting concrete" CEMENT AND CONCRETE RESEARCH, vol. 35, 2005, pages 1457-1462, XP002536667
- L K Crouch ET AL: "High Volume Fly Ash Concrete", World of Coal Ash, 7 March 2007 (2007-03-07), XP055092149, Retrieved from the Internet: URL:http://www.flyash.info/2007/2crouch.pd f [retrieved on 2013-12-09]

## Description

The present invention relates to concrete compositions, concrete formulations for producing concrete compositions when mixed with water, cement compositions, concrete articles, methods of manufacturing concrete compositions and methods of manufacturing concrete articles. Particularly, although not exclusively, the present invention relates to semi-dry concrete compositions for use in the production of concrete articles for use in block paving applications.

Concrete is used in many areas of the construction industry, for example in the construction of buildings, and bridges. Pre-formed concrete bodies, such as paving slabs and blocks, are known for providing surfaces and pre-formed concrete bodies are also employed for decorative purposes or as ready made elements of structures such as buildings.

There are known a number of concretes having differing compositions depending upon the application in which the concrete is used. Such concrete compositions comprise cement, fine aggregate, coarse aggregate and water and optionally other additives. Cement, fine aggregate ('fines') and coarse aggregate can be provided as a concrete formulation which when mixed with water provides a concrete composition. This composition then sets to produce concrete.

There are known concrete compositions which, when set, result in concrete having considerable strength. However, such concretes may still not be as strong as might be desired for some applications. Concrete is often employed in applications where it is subjected to considerable forces. In order to compensate for this, concrete bodies may need to be of a substantial size to provide the required strength. Additionally, concrete bodies may be employed in situations where they are subjected to considerable wear and tear, such as weathering. Known concretes may not withstand such wear and tear as well as may be desired. One such application in which the concrete articles formed from the concrete compositions are subject to considerable forces and considerable wear and tear is in block paving: where concrete blocks are used to provide a surface over which heavy vehicles may frequently travel.

Further, whilst many different mixes with different properties are known and in use, high strength mixes having a low cost factor are few and far between and highly sought after.

JP 11 14 7750 A (Mitsubishi Materials Corp) discloses a cement composition obtained by incorporating 0.01-0.4 pt.wt. of acrylic or cellulose-based water-soluble polymeric powder as thickening agent in 100 pts.wt. of a mixture prepared by mixed grinding of 36-80 pts.wt. of Portland cement, 1-5 pts.wt. of powdery or granular silica fume and 15-60 pts.wt. of limestone fine powder 2,500-12,000 cm²/g in specific surface area.

Concrete compositions may be formulated not only with their properties when set in mind, but also to suit the production technique that the composition will undergo to form articles. One such production technique typically used to produce block paving and walling is referred to as a semi-dry Vibro-Pressed process, which involves moulding the concrete composition under combined vibration and hydraulic pressing. In such a process the concrete composition is "just moist", with a consistency measured by producing a cohesive ball when compressed by squeezing together in the hands. This is also often referred to as "earth-moist" concrete and typically has a water to cement ratio in the range of 0.30 to 0.45.

The present invention aims to address at least one disadvantage associated with known concrete whether discussed herein or otherwise. Preferred embodiments aim to provide high strength concrete articles at relatively low cost.

The present invention is a cement composition for use in a concrete composition according to independent claim 1. Optional technical features are disclosed in the wordings of the dependent claims. The present invention is also a concrete formulation, a concrete composition, and a concrete article according to the other independent claims, with optional technical features disclosed in dependent claims.

According to a first aspect of the present invention there is provided a cement composition for use in a concrete composition, the cement composition comprising:
cement;
at least one cement alternative;
wherein the or each cement alternative is a powder, and wherein the cement and the cement alternative are present relative to each other in an amount of between about 48:52 (in % by weight) and 50:50 (in % by weight); and wherein the cement alternative comprises limestone powder.

Advantageously, it has been found that the substitution of an amount of cement with a cement alternative according to the present invention provides a concrete composition having excellent strength and density characteristics. A further advantage of a concrete composition made using a cement composition of the present invention is that cement, being an expensive commodity, can be in part replaced by a cement alternative, which may be a cheaper material. Accordingly, a cement composition according to the present invention can be used to provide concrete articles having significant financial advantages over prior art concrete articles.

Suitably, the cement comprises Portland Cement. The Portland Cement may be as described in BS EN 197: CEM I. The cement preferably comprises Ordinary Portland Cement (OPC).

Preferably, the at least one cement alternative is substantially chemically unreactive toward water. By the term substantially chemically unreactive toward water it is meant that contact with water does not lead to any chemical reaction. Preferably, the at least one cement alternative does not retain water following exposure thereto and subsequent drying.

Preferably, the at least one cement alternative is selected from one or more of the following materials: limestone powder, dolomite limestone powder, granite powder, pulverised fuel ash powder, bottom furnace ash powder, paper ash powder. The cement alternative comprises limestone powder.

Preferably, the limestone powder comprises at least about 90% by weight calcium carbonate (CaCO₃), more preferably at least about 93% by weight calcium carbonate and most preferably at least about 95% calcium carbonate.

By the term "wherein the or each cement alternative is a powder" it is mean that the or each cement alternative has a particle size of less than 1mm.

Preferably, the cement alternative has an average particle size of less than 150µm, more preferably less than 75µm, yet more preferably less than 45µm.

References herein to particle size refer to particles passed through a sieve as is well known in the art. Accordingly, references to "average particle size of less than ..." should be understood as at least 50% by weight able to pass through a sieve of the corresponding size. For example, if at least 50% of particles (by weight) pass through a sieve with holes of 150µm, then the average particle size is less than 150µm.

In a preferred embodiment, the particle size of the cement alternative is such that at least 90% by weight, more preferably at least 99% by weight passes through a 150µm sieve.

In a preferred embodiment, the particle size of the cement alternative is such that at least 80% by weight, more preferably at least 90% by weight passes through a 75µm sieve.

In a preferred embodiment, the particle size of the cement alternative is such that at least 60% by weight, more preferably at least 75% by weight passes through a 45µm sieve.

Preferably, the cement alternative has a particle size distribution such that at least 99% by weight passes through a 150µm sieve, at least 90% by weight passes through a 75µm sieve, and at least 75% by weight passes through a 45µm sieve.

In a most preferred embodiment, the cement and the cement alternative are present relative to each other in an amount of about 50:50 (in % by weight).

According to a second aspect of the present invention there is provided a concrete formulation comprising a cement composition, the cement composition comprising:
cement;
at least one cement alternative;
   wherein the or each cement alternative is a powder, and wherein the cement and the cement alternative are present relative to each other in an amount of between about 48:52 (in % by weight) and 50:50 (in % by weight) and wherein the cement alternative comprises limestone powder, and
one or more aggregates.

The concrete formulation comprises one or more aggregates. The aggregates may comprise fine aggregates (fines) and/or coarse aggregates.

The aggregates may comprise material such as from naturally occurring or marine sources together with any crushed rock fines or crushed stone material. Alternatively or additionally, the fine aggregates may be derived from suitable recycled or waste material.

Preferably, fine aggregates have a typical average particle size of between about 1mm and 4mm, whereas, preferably, coarse aggregates have a typical average particle size of between about 4 and 20mm.

Examples of suitable aggregates include but are not restricted to sand and limestone.

Preferably, the concrete formulation comprises aggregates in an amount of between 20 and 95 wt% of the overall formulation.

Suitably, the concrete formulation comprises fine aggregates in an amount of between 20 and 95 wt% of the overall formulation.

The concrete formulation may comprise the coarse aggregate material in an amount of between 20 and 95 wt % of the overall formulation.

The cement composition may be present in the concrete formulation in an amount of between about 5 to 30% by weight of the overall formulation. Preferably, the cement composition is present in the concrete formulation in an amount of between about 10% to 20% by weight of the overall formulation, more preferably between about 12% and 18% by weight and most preferably between about 15% and 17% by weight. Preferably, the balance of the above percentages by weight in the overall formulation (ie. to make 100% in total) is comprised of aggregates and, optionally one or more admixture.

Reference herein to "by weight of the overall formulation" refers to the dry weight of the concrete formulation.

The concrete formulation may comprise an admixture agent for aiding consolidation of the formulation during concrete manufacture. Suitably, the admixture agent comprises a polycarboxylate. The admixture agent may be any suitable polycarboxylate.

The admixture may be present in an amount of between about 0.01% to 1% by weight of the overall formulation, more preferably between about 0.1% to 0.5% by weight of the overall formulation and most preferably between about 0.2% and 0.3% by weight of the overall formulation.

Preferably, the concrete formulation comprises less than 5% by weight (with reference to the weight of the overall formulation) of ground granulated blast furnace slag, more preferably less than 3% by weight, more preferably less than 1% by weight and most preferably less than 0.1% by weight. In a particularly preferred embodiment, the concrete formulation comprises substantially no ground granulated blast furnace slag.

References herein to ground granulated blast furnace slag, refer to ground granulated blast furnace slag as described in British Standard BS EN 15167.

The concrete formulation may comprise other additives as are known in the art. For example, the concrete formulation may comprise fillers, pigments, etc.

Preferably, water is added to the concrete formulation to form a concrete composition. Therefore, according to a third aspect of the present invention there is provided a concrete composition comprising:
a cement composition, which cement composition comprises:
cement;
at least one cement alternative;
wherein the or each cement alternative is a powder, and wherein the cement and the cement alternative are present relative to each other in an amount of between about 48:52 (in % by weight) and 50:50 (in % by weight),
and the cement alternative comprises limestone powder, the
concrete composition further
comprising water wherein the water:cement composition ratio is between 0.2 and 0.3 (by weight).

Reference herein to the water:cement composition ratio refers to the total water available in the composition, including that available from the aggregates (where present), divided by the powder composition (the sum of the cement and the cement alternative and any other powders).

Preferably, the concrete composition comprises the concrete formulation of the second aspect. In such an embodiment, it will be understood that the cement composition of the third aspect and the cement composition of the second aspect are the same.

The invention also extends to concrete articles and concrete structures made in accordance with any of the above listed compositions and formulations, as well as to methods of manufacturing concrete compositions and methods of manufacturing concrete bodies and structures using the above mentioned compositions/formulations.

Therefore, according to a further aspect of the present invention there is provided a concrete article formed from a concrete composition, the concrete composition comprising a cement composition, the cement composition comprising:
cement;
at least one cement alternative;
wherein the or each cement alternative is a powder, and wherein the cement and the cement alternative are present relative to each other in an amount of between about 48:52 (in % by weight) and 50:50 (in % by weight) and wherein the cement alternative comprises limestone powder.

Preferably, the concrete composition comprises a concrete formulation according to the second aspect of the invention.

Preferably, the concrete composition is a concrete composition according to the third aspect of the invention.

Preferably, the article comprises a block, for example, for use in block paving.

The invention will now be described with reference to the following non limiting examples.

### EXPERIMENTAL

In the following examples, limestone powder was used to replace a portion of the usual cement content and the amount of water used varied. Details of the compositions of the examples are given in Table 1.

**TABLE 1 (All amounts given in kg)**

| Example | Aggregate 1 | Aggregate 2 | Aggregate 3 | Pigment | Limestone Powder | Cement | GGBS | Admix 1 | Admix 2 | Water 1 | Water 2 | Water:Powder ratio |
|---|---|---|---|---|---|---|---|---|---|---|---|---|
| 1 | 1153 | 577 | 192 | 5 | 180 | 178 | 0 | 4.5 | 0 | 41.47 | 44.45 | 0.240 |
| 2 | 1153 | 577 | 192 | 5 | 175 | 175 | 0 | 3.8 | 0 | 39.55 | 44.45 | 0.240 |
| 3 | 1153 | 577 | 192 | 5 | 176 | 176 | 0 | 3.8 | 0 | 47.07 | 44.45 | 0.260 |
| 4 | 1153 | 577 | 192 | 5 | 173 | 173 | 0 | 6 | 0 | 31.67 | 44.45 | 0.220 |
| (Comp) | 1153 | 577 | 192 | 5.5 | 26 | 120 | 217 | 0 | 2.5 | 73.53 | 44.45 | 0.325 |

| | | | | | | | | | | | | |
|---|---|---|---|---|---|---|---|---|---|---|---|---|
| KEY: Aggregate 1 = Tilbury Dock Sand (0 to 4mm) Aggregate 2 = Askoy Granite (2 to 6mm) Aggregate 3 = Askoy Granite (2 to 6mm) Pigment = CanCarb Black (Carbon Black pigment) Limestone Powder = Trucarb 285 Limestone Powder (99% by wt passing through 150µm sieve, 90% by wt passing through 75µm sieve and 75% by wt passing through 45µm sieve) Cement = Ordinary Portland Cement (OPC) GGBS = ground granulated blast furnace slag Admix 1 = VP Bio (a polycarboxylate admix, commercially available from Grace Construction Products) Admix 2 = EU 06/13 (a polycarboxylate admix, commercially available from Grace Construction Products) Water 1 = Water added to the mixture Water 2 = Water available within the aggregates Water:Powder ratio= Water 1 + Water 2 / sum of powders (Limestone powder, Cement and GGBS) | | | | | | | | | | | | |

### RESULTS

The example formulations as shown above in table1 were formed into blocks using the Vibro-Press method described in the preamble, cured for >10 hours (actual was 14 hours) at a temperature of >24°C and humidity >80%.

The blocks were then tested for strength and density at 7 days and 28 days and the results shown in the table below.

| Example | 7 Days | | 28 Days | |
|---|---|---|---|---|
| | Strength* | Density** | Strength* | Density** |
| 1 | 23.7 | 2336 | 33 | 2272 |
| 2 | 24.5 | 2282 | 30 | 2302 |
| 3 | 22.8 | 2292 | 43 | 2295 |
| 4 | 20.2 | 2292 | 29 | 2321 |
| Comparative | 16.8 | 2372 | 29 | 2344 |

| | | | | |
|---|---|---|---|---|
| *Strength measurements provided are tensile splitting strengths, measured according to BS EN 1338: 5.3.3 Annex F, and given in units of N·mm⁻² **Density measurements provided are measured according to BS EN 12390-7 and are given in units of kg·m⁻³ | | | | |

### Portland Cement:

| **Typical properties** | | |
|---|---|---|
| Surface area | (m²kg) | 290 to 420 |
| Setting time - initial | (minutes) | 80 to 200 |
| BS EN 196-1 Mortar | | |
| - compressive strength | | |
| 2 day | (N/mm²) | 25 to 35 |
| 7 day | (N/mm²) | 40 to 50 |
| 28 day | (N/mm²) | 54 to 64 |
| Apparent particle density | (Kg/m³) | 3080 to 3180 |
| Bulk density | (Kg/m³) | |
| | Aerated | 1000 to 1300 |
| | Settled | 1300 to 1450 |
| Colour | Y value | 27.5 to 37.5 |
| Surface | SO₃ (%) | 2.5 to 3.5 |
| Chloride | Cl (%) | Less than 0.06 |
| Alkali | Eq Na₂O (%) | 0.4 to 0.75 |
| Tricalcium Silicate | C₃S (%) | 45.0 to 60.0 |
| Dicalcium Silicate | C₂S (%) | 15.0 to 25.0 |
| Tricalcium Aluminate | C₃A (%) | 7.0 to 12.0 |
| Tetracalcium Aluminoferrite | C₄AF (%) | 6.0 to 10.0 |
| Portland cements are predominantly compounds of calcium silicate and calcium aluminate with a small proportion of gypsum. They are produced by burning or sintering, at a tempertature in excess of 1400°C, a finely ground mixture of raw materials which contain predominantly calcium carbonate, aluminium oxide, silica and iron oxide. The cooled clinker formed is ground under controlled conditions with the addition of typically 5% gypsum | | |

### Limestone Powder:

### • Limestone Synonyms:

Limestone, calcium carbonate, precipitated calcium carbonate, ground/pulverized calcium carbonate, PCC< GCC, calcite, limestone, crushed marble, ground limestone, lime, chalk, whiting, champagne chalk, French chalk, albacar, and aeromatt

### • Limestone Formula:

CaCO₃

### • Limestone Description:

Produced by crushing, grinding, precipitation, and classifying high purity, white, calcite limestone
Typical purity of Limestone Powder is 95 - 99.9% pure properties of Limestone Powder are described below:

| | |
|---|---|
| Molecular Weight (g/mol.) | 100.09 |
| pH (saturated solution) | 9.3 TO 9.8 |
| Loose Bulk Density (lbs/ft³) | -35-58 |
| Loose Bulk Density (lbs./cu. ft³) | 50 to 90 |
| Tapped Desnity (g/cm³) | 0.43 to 0.98 |
| Melting Point (°C) | |
| Specific Heat (Btu/lbs./degF) | 0.19 |
| Thermal Conductivity (W/cm·K) | |
| Mohs Hardness @20°C | 3.0 |
| Merck | 11,1657 |
| Specific Gravity (solids) | 2.70-2.71 |
| Index of Refraction | 1.6 |
| Crystallography | Hexagonal |
| CaC0₃ | 95-99.9% |

In the above examples, some specific examples of formulations have been set out. However, it should be appreciated by the man skilled in the art that the invention is not limited to these particular ratios and formulations. In fact, a range of formulations may in general be used and fall within the scope of the present invention.

### Discussion

As shown above, concrete compositions according to the present invention have a significantly lower amount of cement than prior art formulations, approximately 25% less cement in fact. A person skilled in the art would expect that this significant reduction in cement would lead to a much lower strength in the resulting concrete article. However, as shown in Table 2, this is not the case. In fact, on the contrary, the concrete articles show improved strength characteristics. Furthermore, the compositions of the present invention allow the water:powder ratio to be significantly reduced, which a person skilled in the art would expect to lead to detrimental results.

As shown in the table above, concrete compositions made in accordance with the present invention have higher tensile strength, but lower densities than prior art concrete compositions. Further, because the cement content is lower than traditional block formulations, the overall cost of the formulations is also lower.

## Claims

1. A cement composition for use in a concrete composition, the cement composition comprising:
cement;
at least one cement alternative;
wherein the or each cement alternative is a powder, wherein the cement and the cement alternative are present relative to each other in an amount of between 48:52 (in % by weight) and 50:50 (in % by weight); and
wherein the cement alternative comprises limestone powder.

2. A cement composition according to claim 1, wherein the cement comprises Ordinary Portland Cement.

3. A cement composition according to either of claim 1 or claim 2, wherein the at least one cement alternative is substantially chemically unreactive toward water.

4. A cement composition according to any preceding claim, wherein the or each cement alternative has a particle size of less than 1 mm.

5. A cement composition according to any preceding claim, wherein the cement alternative has an average particle size of less than 150µm.

6. A cement composition according to any preceding claim, wherein the cement alternative has a particle size distribution such that at least 99% by weight passes through a 150µm sieve, at least 90% by weight passes through a 75µm sieve, and at least 75% by weight passes through a 45µm sieve.

7. A cement composition according to any preceding claim, wherein the cement and the cement alternative are present relative to each other in an amount of 50:50 (in % by weight).

8. A concrete formulation comprising a cement composition according to any preceding claim and one or more aggregates.

9. A concrete formulation according to claim 8, wherein the aggregates comprise material such as from naturally occurring or marine sources together with any crushed rock fines or crushed stone material.

10. A concrete formulation according to either of claim 8 or claim 9, wherein the aggregates are present in an amount of between 20 and 95 wt% of the overall formulation.

11. A concrete formulation according to any of claims 8 to 10, wherein the cement composition is present in the concrete formulation in an amount of between about 5 to 30% by weight of the overall formulation.

12. A concrete formulation according to any of claim 8 to 11, which further comprises an admixture agent.

13. A concrete formulation according to claim 12, wherein the admixture is present in an amount of between about 0.01% to 1% by weight of the overall formulation.

14. A concrete formulation according to any of claims 8 to 13, which comprises less than 5% by weight (with reference to the weight of the overall formulation) of ground granulated blast furnace slag.

15. A concrete formulation according to any one of claims 8 to 14, further comprising water.

16. A concrete composition comprising:
a cement composition as claimed in claim 1; and
water; wherein the water:cement composition ratio is between 0.2 and 0.3 (by weight).

17. A concrete article formed from a concrete composition, the concrete composition comprising a cement composition according to any one of claims 1-7.

18. A concrete article formed from a concrete composition, the concrete composition comprising a cement composition according to any one of claims 1-7.

## Patentansprüche

1. Zementzusammensetzung zur Verwendung in einer Betonzusammensetzung, wobei die Zementzusammensetzung umfasst:
Zement;
wenigstens eine Zementalternative;
wobei die oder jede Zementalternative ein Pulver ist, wobei der Zement und die Zementalternative relativ zueinander in Mengen von zwischen 48:52 (in Gew.-%) und 50:50 (in Gew.-%) vorhanden sind; und
wobei die Zementalternative Kalksteinpulver umfasst.

2. Zementzusammensetzung gemäß Anspruch 1, wobei der Zement gewöhnlichen Portlandzement umfasst.

3. Zementzusammensetzung gemäß einem von Anspruch 1 und Anspruch 2, wobei die wenigstens eine Zementalternative im Wesentlichen chemisch nichtreaktiv gegenüber Wasser ist.

4. Zementzusammensetzung gemäß einem der vorstehenden Ansprüche, wobei die oder jede Zementalternative eine Partikelgröße von weniger als 1 mm aufweist.

5. Zementzusammensetzung gemäß einem der vorstehenden Ansprüche, wobei die Zementalternative eine mittlere Partikelgröße von weniger als 150 µm aufweist.

6. Zementzusammensetzung gemäß einem der vorstehenden Ansprüche, wobei die Zementalternative eine Partikelgrößenverteilung aufweist, bei der wenigstens 99 Gew.-% durch ein 150-µm-Sieb durchtreten, wenigstens 90 Gew.-% durch ein 75-µm-Sieb durchtreten und wenigstens 75 Gew.-% durch ein 45-µm-Sieb durchtreten.

7. Zementzusammensetzung gemäß einem der vorstehenden Ansprüche, wobei der Zement und die Zementalternative relativ zueinander in Mengen von 50:50 (in Gew.-%) vorhanden sind.

8. Betonformulierung, umfassend eine Zementzusammensetzung gemäß einem der vorstehenden Ansprüche und ein oder mehrere Aggregate.

9. Betonformulierung gemäß Anspruch 8, wobei die Aggregate Material, wie z. B. aus natürlich vorkommenden oder Meeresquellen, zusammen mit zerkleinertem Gesteins-Feinmaterial oder zerkleinertem Steinmaterial umfassen.

10. Betonformulierung gemäß einem von Anspruch 8 und Anspruch 9, wobei die Aggregate in einer Menge von zwischen 20 und 95 Gew.-% der Gesamtformulierung vorhanden sind.

11. Betonformulierung gemäß einem der Ansprüche 8 bis 10, wobei die Zementzusammensetzung in der Betonformulierung in einer Menge von zwischen etwa 5 und 30 Gew.-% der Gesamtformulierung vorhanden ist.

12. Betonformulierung gemäß einem der Ansprüche 8 bis 11, die ferner ein Zusatzmittel umfasst.

13. Betonformulierung gemäß Anspruch 12, wobei der Zusatz in einer Menge von zwischen etwa 0,01 Gew.-% und 1 Gew.-% der Gesamtformulierung vorhanden ist.

14. Betonformulierung gemäß einem der Ansprüche 8 bis 13, die weniger als 5 Gew.-% (bezogen auf das Gewicht der Gesamtformulierung) an gemahlener granulierter Hochofenschlacke umfasst.

15. Betonformulierung gemäß einem der Ansprüche 8 bis 14, ferner umfassend Wasser.

16. Betonzusammensetzung, umfassend:
eine Zementzusammensetzung gemäß Anspruch 1; und
Wasser;
wobei das Wasser:Zementzusammensetzung-Verhältnis zwischen 0,2 und 0,3 (nach Gewicht) beträgt.

17. Betonzusammensetzung gemäß Anspruch 16, ferner umfassend ein oder mehrere Aggregate.

18. Betongegenstand, gebildet aus einer Betonzusammensetzung, wobei die Betonzusammensetzung eine Zementzusammensetzung gemäß einem der Ansprüche 1-7 umfasst.

## Revendications

1. Composition de ciment destinée à être utilisée dans une composition de béton, la composition de ciment comprenant :
du ciment ;
au moins un substitut de ciment ;
dans laquelle le substitut de ciment ou chaque substitut de ciment est une poudre, dans laquelle le ciment et le substitut de ciment sont présents en une quantité relative de l'un par rapport à l'autre comprise entre 48:52 (en % en poids) et 50:50 (en % en poids) ; et
dans laquelle le substitut de ciment comprend de la poudre de pierre calcaire.

2. Composition de ciment selon la revendication 1, dans laquelle le ciment comprend du ciment Portland ordinaire.

3. Composition de ciment selon l'une ou l'autre de la revendication 1 ou de la revendication 2, dans laquelle l'au moins un substitut de ciment est pratiquement chimiquement non réactif vis-à-vis de l'eau.

4. Composition de ciment selon une quelconque revendication précédente, dans laquelle le substitut de ciment ou chaque substitut de ciment a une taille des particules inférieure à 1 mm.

5. Composition de ciment selon une quelconque revendication précédente, dans laquelle le substitut de ciment a une taille moyenne des particules inférieure à 150 µm.

6. Composition de ciment selon une quelconque revendication précédente, dans laquelle le substitut de ciment a une distribution de la taille des particules telle qu'au moins 99 % en poids passe dans un tamis de 150 µm, au moins 90 % en poids passe dans un tamis de 75 µm et au moins 75 % en poids passe dans un tamis de 45 µm.

7. Composition de ciment selon une quelconque revendication précédente, dans laquelle le ciment et le substitut de ciment sont présents en une quantité relative de l'un par rapport à l'autre de 50:50 (en % en poids).

8. Formulation de béton comprenant une composition de ciment selon une quelconque revendication précédente et un ou plusieurs granulats.

9. Formulation de béton selon la revendication 8, dans laquelle les granulats comprennent un matériau tel qu'un matériau provenant de sources d'origine naturelle ou marines conjointement avec de quelconques fines de roche concassée ou un matériau en pierre concassée.

10. Formulation de béton selon l'une ou l'autre de la revendication 8 ou de la revendication 9, dans laquelle les granulats sont présents en une quantité comprise entre 20 et 95 % en poids de la formulation globale.

11. Formulation de béton selon l'une quelconque des revendications 8 à 10, dans laquelle la composition de ciment est présente dans la formulation de béton en une quantité comprise entre environ 5 et 30 % en poids de la formulation globale.

12. Formulation de béton selon l'une quelconque des revendications 8 à 11, qui comprend en outre un agent adjuvant.

13. Formulation de béton selon la revendication 12, dans laquelle l'adjuvant est présent en une quantité comprise entre environ 0,01 % et 1 % en poids de la formulation globale.

14. Formulation de béton selon l'une quelconque des revendications 8 à 13, qui comprend moins de 5 % en poids (par rapport au poids de la formulation globale) de laitier de haut fourneau granulé broyé.

15. Formulation de béton selon l'une quelconque des revendications 8 à 14, comprenant en outre de l'eau.

16. Composition de béton comprenant :
une composition de ciment telle que revendiquée dans la revendication 1 ; et
de l'eau ;
dans laquelle le rapport de composition eau:ciment est compris entre 0,2 et 0,3 (en poids).

17. Composition de béton selon la revendication 16, qui comprend en outre un ou plusieurs granulats.

18. Article en béton formé à partir d'une composition de béton, la composition de béton comprenant une composition de ciment selon l'une quelconque des revendications 1-7.
